# EUROPEAN PATENT SPECIFICATION

(11) **EP 4 389 488 B1**
(45) Date of publication and mention of the grant of the patent: **29.04.2026**
(21) Application number: 22862519.0
(22) Date of filing: 25.01.2022
(51) Int. Cl.: B60K 25/06, B66C 13/18, F16D 1/04

(54) **POWER TAKE-OFF TRANSMISSION DEVICE AND CRANE**
ZAPFWELLENGETRIEBEVORRICHTUNG UND KRAN
DISPOSITIF DE TRANSMISSION DE PRISE DE FORCE ET GRUE

(30) Priority: 01.09.2021 CN 202122101569 U
(43) Date of publication of application: 26.06.2024
(73) Proprietor: Sany Mobile Cranes Co., Ltd., Changsha, Hunan 410000 (CN)
(72) Inventor: LI, Dongsheng, Changsha, Hunan 410000 (CN); GUO, Xinqiang, Changsha, Hunan 410000 (CN); WU, Fengfei, Changsha, Hunan 410000 (CN)
(74) Representative: Osterhoff, Utz
(86) International application number: PCT/CN2022/073804
(87) International publication number: WO 2023/029368

(56) References cited:
- EP-A2- 1 236 606
- CN-U- 201 931 993
- CN-U- 201 931 993
- CN-U- 202 439 566
- CN-U- 211 335 580
- CN-U- 212 803 973
- CN-U- 212 803 973
- CN-Y- 2 564 778
- DE-A1- 2 745 628
- JP-B2- 4 680 769

## Description

### TECHNICAL FIELD

The present invention relates to the technical field of engineering machinery, and in particular to a power take-off transmission device and a crane.

### BACKGROUND

In related existing technologies, the traditional truck crane consumes a lot of fuel during loading operations, has low conversion efficiency and low energy utilization rate.

The electric motor and the oil pump are important components of the power take-off transmission device. Conventionally, the electric motor is connected to the oil pump by a transmission shaft or coupling. Both the input end of the electric motor and the output end of the electric motor have transmission shafts, or the input end of the electric motor is the transmission shaft and the output end of the electric motor is the end coupling. When the output end of the electric motor and the input end of the oil pump are connected by a transmission shaft or coupling, the transmission efficiency decreases. Moreover, it is difficult to ensure that the output end of the electric motor and the input end of the oil pump are coaxial, which can easily lead to vibration, abnormal noise and oil leakage problems.

CN2564778Y discloses a direct-connected gear oil pump motor, which relates to a power device, particularly a power device for a jacking hydraulic system for a tower crane, and belongs to the field of power machinery. By directly fixing the gear oil pump 1 on the motor flange end cover 8 that is integrated with the motor, removing the connecting bracket and coupling, shortening the length of the motor shaft output end, and providing a notch 10 at the output end of the motor shaft 6 according to the structural type of the gear oil pump input shaft 2 to directly match and connect with the shaft extension 11 of the gear oil pump input shaft, so as to ensure the coaxiality of the gear oil pump input shaft and the motor output shaft, the number of accessories is reduced, the cost is lowered, and the entire device is compact in structure, small in size, and more convenient to install.

CN212803973U provides a direct-connected structure for the motor and hydraulic pump of an electric stacker, which belongs to the technical field of storage equipment. A direct-connected structure for the motor and hydraulic pump of an electric stacker is arranged between the motor and the hydraulic pump. By respectively opening a plurality of fixing holes and a plurality of mounting holes corresponding to the fixing holes on the motor and the hydraulic pump, and connecting the fixing holes and the mounting holes through a fastener group, the direct installation of the motor and the hydraulic pump is realized. The structure is simple, the number of support plates and fastener groups in the existing structure is reduced, and the manufacturing cost is lower. In addition, the output shaft of the motor and the input shaft of the hydraulic pump are directly connected through a spline, avoiding the problems of large structural space occupation, complex structure, mechanical loss and high manufacturing cost caused by the use of transition connectors such as drive shafts in the existing structure. At the same time, it also avoids the defects of high processing difficulty and short service life of the motor and hydraulic pump caused by considering dynamic balance problems, and the structural design is more reasonable.

CN201931993U provides a mechanical transmission device, including a gearbox and a hydraulic pump. The first connecting disc of the power take-off of the gearbox is fixedly connected to the second connecting disc of the hydraulic pump. The second connecting disc is sleeved on the outer periphery of the input shaft of the hydraulic pump. The first connecting disc is provided with an internal spline. The input shaft of the hydraulic pump is provided with an external spline. The internal spline is connected to the external spline in a mating manner. This mechanical transmission device can increase the service life of the power take-off and the hydraulic pump while reducing mechanical transmission losses. In addition, the utility model also provides a crane having the above-mentioned mechanical transmission device.

According to JP4680769B2, a hybrid drive system for a work vehicle is provided, comprising: a generator connected to a PTO shaft, the PTO shaft being attached to a transmission that transmits engine power to drive wheels and supplies the generated electricity to a battery; an electric motor driven by battery power; a housing that houses the generator and the electric motor; and a pump that generates fluid pressure to drive auxiliary equipment connected to a rotating shaft of the electric motor.

### SUMMARY

In view of this, a first object according to the present application is to provide a power take-off transmission device, which solves or improves the technical problem in the background art that it is difficult to ensure that the output end of the electric motor and the input end of the oil pump are coaxial.

The first aspect according to the present application provides a power take-off transmission device. The power take-off transmission device includes an electric motor including an electric motor output shaft, a hydraulic pump including a pump input shaft, a mounting rack provided with a mounting stop penetrating the mounting rack in an axial direction, and the mounting stop is configured to form a radial limit to the electric motor output shaft and/or the pump input shaft; the electric motor output shaft and the pump input shaft are connected to each other via the mounting stop; and the electric motor further includes an electric motor housing, and the electric motor housing is connected to the mounting rack.

The power take-off transmission device provided in the first aspect according to the present application does not need to be connected by a transmission shaft or coupling, and the electric motor output shaft and the pump input shaft are connected to each other via the mounting stop. The mounting stop forms a radial limit to the electric motor output shaft and/or the pump input shaft, thereby ensuring that the electric motor output shaft and the pump input shaft are coaxially installed in the axial direction, which can avoid vibration, abnormal noise and oil leakage problems, thereby ensuring the reliability of the power take-off transmission device.

Combining the first aspect, in a possible implementation method, the mounting rack is provided with a plurality of counterbore holes along a circumferential direction of the mounting stop for respectively passing fasteners to connect the mounting rack and the electric motor housing.

Combining the first aspect, in a possible implementation method, the hydraulic pump further includes a pump housing, and the pump housing is connected to the mounting rack.

Combining the first aspect, in a possible implementation method, the mounting rack is provided with a plurality of connecting holes along a circumferential direction of the mounting stop for respectively passing fasteners to connect the mounting rack and the pump housing.

Combining the first aspect, in a possible implementation method, the electric motor output shaft and the pump input shaft are inserted and matched in a concave and convex manner.

Combining the first aspect, in a possible implementation method, the electric motor output shaft is a spline sleeve, the pump input shaft is a spline shaft, and the spline sleeve is sleeved on an outside of the spline shaft.

Combining the first aspect, in a possible implementation method, the power take-off transmission device further includes:
an auxiliary rack provided on a housing of an input end of the electric motor.

The crane provided in a second aspect according to the present application includes a machine frame and the power take-off transmission device described in any implementation methods, and the power take-off transmission device is provided on the machine frame.

The crane provided in the second aspect according to the present application includes the power take-off transmission device in any of the above implementation methods, therefore, the crane has the technical effects of any of the above power take-off transmission devices, which will not be described again here.

Combining the second aspect, in a possible implementation method, the crane further includes: a support plate fixedly connected to the machine frame, the mounting rack of the power take-off transmission device includes a mounting plate and a bottom plate, the mounting plate is provided with the mounting stop, the mounting plate is connected to the bottom plate, and the bottom plate is detachably connected to the support plate.

### BRIEF DESCRIPTION OF THE DRAWINGS

In order to explain the technical solutions in the present application or the existing technology more clearly, the accompanying drawings needed to be used in the description of the embodiments or the existing technology will be briefly introduced below. Obviously, the accompanying drawings in the following description are only some embodiments according to the present application, other accompanying drawings can be obtained based on the provided accompanying drawings without exerting creative efforts for those of ordinary skill in the art.
FIG. 1 shows a partial cross-sectional structural schematic view of a power take-off transmission device provided by some implementations according to the present invention.
FIG. 2 shows a partial three-dimensional structural schematic view of the power take-off transmission device provided by the implementation shown in FIG. 1.
FIG. 3 shows a three-dimensional structural schematic view of the power take-off transmission device provided by the implementation shown in FIG. 1.
FIG. 4 shows a front structural schematic view of the power take-off transmission device provided by some implementations according to the present invention.

### DETAILED DESCRIPTION OF THE EMBODIMENTS

### Application overview

In order to solve the technical problems existing in the background art, there are two common ways to electrify the crane's loading operation, one way is to use the battery as the energy source to drive the electric motor to drive the loading power take-off oil pump to work, and the other way is to connect another electric motor in series to the oil pump power take-off transmission system driven by engine. When in an operating environment where power is sufficient and easily accessible, such as steel works, chemical plants, or in factories where the use of fuel engines is restricted, such as oil fields, the engine can be shut down, and the electric motor is driven by the external power grid to drive the power take-off oil pump to realize the loading operation. When power is not easily available, the engine can still be used to provide power to the oil pump without affecting the loading operation. Some existing technologies also use a connection method in which the electric motor and the oil pump are installed on one bracket, however, it is still impossible to ensure that the electric motor and the oil pump are coaxially installed.

In view of the above technical problems, the basic concept of the present application is to propose a power take-off transmission device and a crane. The power take-off transmission device is divided into three layers, the first layer is configured to enable the electric motor and the oil pump to be coaxially installed, the second layer is configured to ensure good alignment between the output end of the electric motor and the input end of the oil pump to ensure the reliability of power transmission, and the third layer is configured to solve the problem of too long cantilever of the oil pump device. Since the output end of the electric motor and the input end of the oil pump are installed in the axial direction respectively via the mounting stop, thus enabling to prevent the radial displacement of the output end of the electric motor and the radial displacement of the input end of the oil pump, thereby ensuring the coaxial installation of the electric motor and the oil pump. The installation of the output end of the electric motor and the input end of the oil pump is realized by the cooperation of the spline sleeve and the spline shaft, thereby enabling to ensure the reliability of the connection between the electric motor and the oil pump. By providing an auxiliary support structure on the housing of the input end of the electric motor, the problem of too long cantilever of the oil pump device can be solved.

It should be noted that the power take-off transmission device provided by the present application can be applied to cranes in any scenario. Specifically, the mechanical structure is designed to complete specific work tasks, and the way to complete the work tasks is to complete specific mechanical actions or information transmission by the corresponding mechanical structure or some components in the mechanical structure or all components in the mechanical structure.

After introducing the basic principles of the present application, various nonlimiting embodiments according to the present invention will be specifically introduced below with reference to the accompanying drawings.

### Exemplary power take-off transmission device

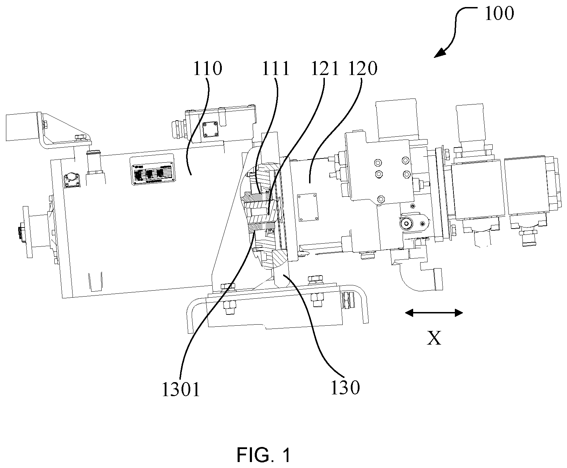

FIG. 1 shows a front structural schematic view of the power take-off transmission device according to the present invention. As shown in FIG. 1, the power take-off transmission device 100 includes an electric motor 110, a hydraulic pump 120 and a mounting rack 130. The electric motor 110 includes an electric motor output shaft 111. The hydraulic pump 120 includes a pump input shaft 121, and the hydraulic pump 120 may be an oil pump. The mounting rack 130 is provided between the electric motor 110 and the hydraulic pump 120, and is configured to install the electric motor 110 and the hydraulic pump 120. It can be understood that the electric motor 110 and the hydraulic pump 120 are provided on the mounting rack 130 together, which simplifies the structure. The mounting rack 130 is provided with a mounting stop 1301 penetrating the mounting rack 130 in an axial direction. The electric motor output shaft 111 and the pump input shaft 121 are connected to each other via the mounting stop 1301. The shape of the inner wall of the mounting stop 1301 is adapted to the outer wall of the electric motor output shaft 111 and/or the outer wall of the pump input shaft 121, so that the mounting stop 1301 forms a radial limit to the electric motor output shaft 111 and/or the pump input shaft 121, thereby ensuring that the electric motor output shaft 111 and the pump input shaft 121 are coaxially installed in the axial direction X, which can avoid the occurrence of vibration, abnormal noise and oil leakage problems, thus guaranteeing the reliability of the power take-off transmission device.

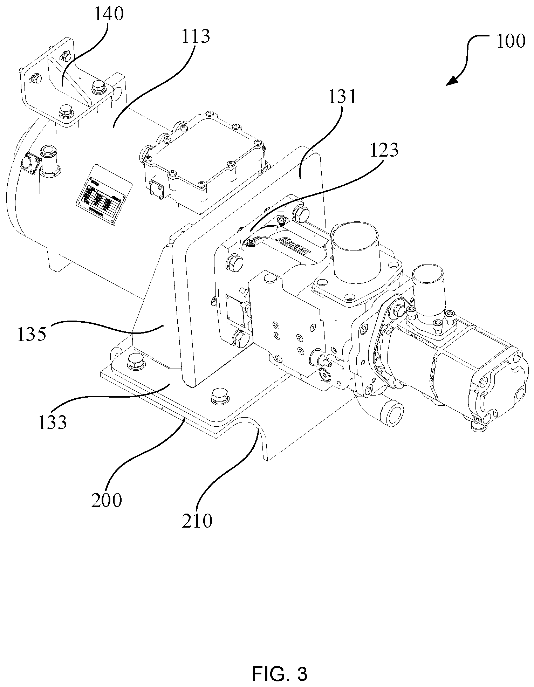

FIG. 3 shows a three-dimensional structural schematic view of the power take-off transmission device provided by the implementation shown in FIG. 1. As shown in FIG. 3, in a possible implementation, the electric motor 110 further includes an electric motor housing 113, and the electric motor housing 113 is connected to the mounting rack 130, thus making the installation structure of the electric motor 110 more stable, further ensuring the coaxial installation of the electric motor 110 and the hydraulic pump 120.

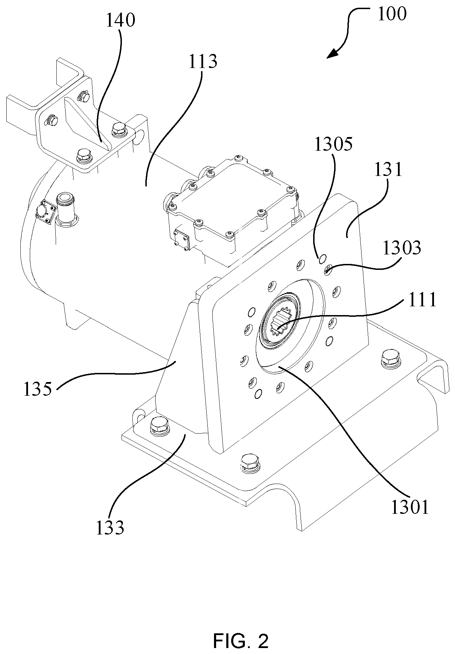

FIG. 2 shows a partial three-dimensional structural schematic view of the power take-off transmission device provided by the implementation shown in FIG. 1. As shown in FIG. 2, in a possible implementation, the mounting rack 130 is provided with a plurality of counterbore holes 1303 along a circumferential direction of the mounting stop 1301 for respectively passing fasteners to connect the mounting rack 130 and the electric motor housing 113. The counterbore hole 1303 is a threaded hole, ten counterbore holes 1303 can be provided, ten counterbore holes 1303 are evenly provided around the mounting stop 1301, and the recessed part of the counterbore hole 1303 faces the hydraulic pump 120. The fastener is partially located in the counterbore hole 1303, for example, the fastener can be a screw or a counterbore bolt, so that the installation structure of the mounting rack 130 and the electric motor 110 can be simplified.

As shown in FIG. 3, in a possible implementation, the hydraulic pump 120 further includes a pump housing 123, and the pump housing 123 is connected to the mounting rack 130, thus making the installation structure of the hydraulic pump 120 more stable, and further ensuring the coaxial installation of the hydraulic pump 120 and the electric motor 110.

As shown in FIG. 3, in a possible implementation, the mounting rack 130 is provided with a plurality of connecting holes 1305 along a circumferential direction of the mounting stop 1301, for example, four connecting holes 1305 is provided, and the connecting hole 1305 can be threaded hole or unthreaded hole, so as to respectively pass fasteners to connect the mounting rack 130 and the pump housing 123. Four connecting holes 1305 are provided around the mounting stop 1301, and the connecting holes 1305 can be provided on the same circumference as the counterbore hole 1303, thus making the overall installation structure more compact.

As shown in FIG. 1, in a possible implementation, the electric motor output shaft 111 and the pump input shaft 121 are inserted and matched in a concave and convex manner. When the electric motor output shaft 111 is provided with a concave structure, such as a cylinder structure, the outer surface of the electric motor output shaft 111 matches the inner surface of the mounting stop 1301 to further fix the electric motor output shaft 111. For example, a convex structure can be provided on the outer surface of the electric motor output shaft 111, a concave structure can be provided on the inner surface of the mounting stop 1301, and the convex structure is inserted into the concave structure to realize the purpose of further fixing the electric motor output shaft 111. In this case, the pump input shaft 121 is provided with a convex structure, and the convex structure is inserted into the concave structure, so that it can be realized that the electric motor output shaft 111 and the pump input shaft 121 are inserted and matched in a concave and convex manner, and the coaxial installation of the electric motor output shaft 111 and the pump input shaft 121 can be better realized.

As shown in FIG. 3, in a possible implementation, the electric motor output shaft 111 is a spline sleeve, and the pump input shaft 121 is a spline shaft and the spline sleeve is sleeved on an outside of the spline shaft. The spline sleeve is an internal spline, and the spline shaft is an external spline. Both the internal spline and the external spline are multi-tooth parts. The splines on the inner cylindrical surface are internal splines, and the splines on the outer cylindrical surface are external splines. The spline shaft and the spline sleeve cooperate to form a spline connection. Since more teeth and grooves are directly and evenly produced on the shaft and hub hole, the joint force is more uniform. Since the grooves are shallower, the stress concentration at the tooth root is smaller, the strength of the shaft and hub is less weakened. At the same time, due to the relatively large number of teeth and the relatively large total contact area, it can withstand relatively large loads. The parts on the shaft have good alignment with the shaft, and have good guidance quality. Therefore, the electric motor output shaft 111 and the pump input shaft 121 have good transmission alignment and reliable transmission, which can reduce vibration, and avoid abnormal transmission noise and oil pump oil leakage problems.

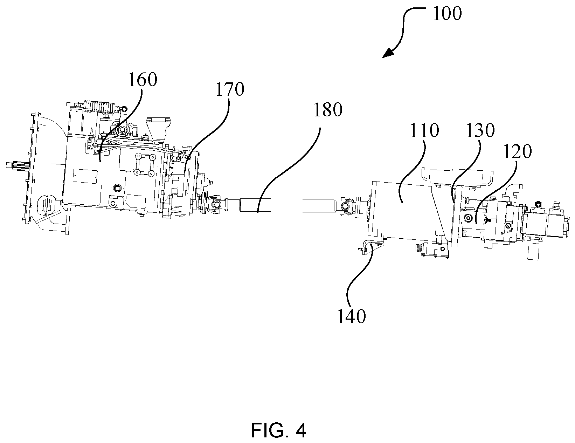

As shown in FIG. 3, in a possible implementation, the power take-off transmission device 100 further includes an auxiliary rack 140 provided on a housing of an input end of the electric motor 110. FIG. 4 shows a front structural schematic view of the power take-off transmission device provided by some implementations according to the present application. As shown in FIG. 4, the power take-off transmission device 100 further includes a speed transmission 160, a power takeoff 170 and a power take-off transmission shaft 180, and the power takeoff 170 is connected to the output end of the speed transmission 160. The output end of the power takeoff 170 is connected to a universal joint, the output end of the power takeoff 170 is connected to one end of the power take-off transmission shaft 180 by the universal joint, and another end of the power take-off transmission shaft 180 is connected to the input end of the electric motor 110 by a universal joint. Therefore, the overall cantilever of the power take-off transmission device 100 is relatively long and is prone to vibration, thus leading to oil leakage problems. The auxiliary rack 140 is L-shaped, and in order to increase the structural strength of the auxiliary rack 140, reinforcing ribs can be provided on the auxiliary rack 140. The auxiliary rack 140 can be connected to the electric motor housing 113 of the electric motor 110 by fasteners, for example, the fastener can be a bolt. In addition, in order to ensure that the auxiliary rack 140 is adjustable, the mounting holes provided on the auxiliary rack 140 are long holes to ensure that the positions of the auxiliary rack 140 are adjustable in the front, back, left and right. The auxiliary rack 140 is welded and fixed to the machine frame by a support board with adjustable upper and lower positions, and the support plate can be provided in the air. The auxiliary rack 140 can solve the problem of the power take-off transmission device's cantilever being too long, thus increasing the system rigidity and reducing vibration.

### Exemplary crane

The crane includes a machine frame and the power take-off transmission device 100 in any implementation, and the power take-off transmission device 100 is provided on the machine frame.

The crane in the present application includes the power take-off transmission device 100 in any of the above implementations, therefore, the crane has the technical effects of any of the above power take-off transmission device 100, which will not be described again here.

As shown in FIG. 1, the crane further includes a support plate 200 fixedly connected to the machine frame. A mounting rack 130 of the power take-off transmission device 100 includes a mounting plate 131 and a bottom plate 133, the mounting plate 131 is provided with a mounting stop 1301, the mounting plate 131 is connected to the bottom plate 133, and the bottom plate 133 is detachably connected to the support plate 200. In order to increase the overall structural strength of the mounting rack 130, a rib plate 135 is provided on the plate surface of the side of the mounting plate 131 facing the electric motor 110, and the rib plate 135 is respectively connected to the mounting plate 131 and the bottom plate 133. The edge of the support plate 200 is provided with an arched part 210 to facilitate hoisting and ensure the convenience of hoisting and maintenance. The support plate 200 is provided on the chassis plate of the vehicle frame. When the power take-off transmission device100 is hoisted, the bottom plate 133 and the support plate 200 can be detachably connected by bolts.

The foregoing description has been presented for the purposes of illustration and description. Furthermore, this description is not intended to limit the embodiments according to the present application to the form disclosed herein.

The above are only some embodiments according to the present invention and are not intended to limit the present invention, which is defined by the appended claims.

## Claims

1. A power take-off transmission device (100) comprising:
an electric motor (110) comprising an electric motor output shaft (111);
a hydraulic pump (120) comprising a pump input shaft (121); **characterized in that** the power take-off transmission device further comprises:
a mounting rack (130) provided with a mounting stop (1301) penetrating the mounting rack (130) in an axial direction (X), and the mounting stop is configured to form a radial limit to the electric motor output shaft and/or the pump input shaft;
that the electric motor output shaft (111) and the pump input shaft (121) are connected to each other via the mounting stop (1301); and
that the electric motor (110) further comprises an electric motor housing (113), and the electric motor housing (113) is connected to the mounting rack (130).

2. The power take-off transmission device (100) according to claim 1, wherein the mounting rack (130) is provided with a plurality of counterbore holes (1303) along a circumferential direction of the mounting stop (1301) for respectively passing fasteners to connect the mounting rack (130) and the electric motor housing (113).

3. The power take-off transmission device (100) according to claim 1, wherein the hydraulic pump (120) further comprises a pump housing (123), and the pump housing (123) is connected to the mounting rack (130).

4. The power take-off transmission device (100) according to claim 3, wherein the mounting rack (130) is provided with a plurality of connecting holes (1305) along a circumferential direction of the mounting stop (1301) for respectively passing fasteners to connect the mounting rack (130) and the pump housing (123).

5. The power take-off transmission device (100) according to any one of claims 1 to 4, wherein the electric motor output shaft (111) and the pump input shaft (121) are inserted and matched in a concave and convex manner.

6. The power take-off transmission device (100) according to claim 5, wherein the electric motor output shaft (111) is a spline sleeve, the pump input shaft (121) is a spline shaft, and the spline sleeve is sleeved on an outside of the spline shaft.

7. The power take-off transmission device (100) according to any one of claims 1 to 4, further comprising:
an auxiliary rack (140) provided on a housing of an input end of the electric motor (110).

8. A crane, **characterized by** comprising:
a machine frame;
the power take-off transmission device (100) according to any one of claims 1 to 7, wherein the power take-off transmission device (100) is provided on the machine frame.

9. The crane according to claim 8, further comprising:
a support plate (200) fixedly connected to the machine frame;
wherein the mounting rack (130) of the power take-off transmission device (100) comprises a mounting plate (131) and a bottom plate (133), the mounting plate (131) is provided with the mounting stop (1301), the mounting plate (131) is connected to the bottom plate (133), and the bottom plate (133) is detachably connected to the support plate (200).

## Patentansprüche

1. Nebenabtriebs-Übertragungsvorrichtung (100), umfassend:
einen Elektromotor (110), der eine Elektromotorausgangswelle (111) umfasst;
eine Hydraulikpumpe (120), die eine Pumpeneingangswelle (121) umfasst; **dadurch gekennzeichnet, dass** die Nebenabtriebs-Übertragungsvorrichtung ferner umfasst:
ein Montagegestell (130), das mit einem Montageanschlag (1301) versehen ist, der das Montagegestell (130) in einer axialen Richtung (X) durchdringt, und der Montageanschlag so konfiguriert ist, dass er die Elektromotorausgangswelle und/oder die Pumpeneingangswelle radial zu begrenzen;
dass die Elektromotorausgangswelle (111) und die Pumpeneingangswelle (121) über den Montageanschlag (1301) miteinander verbunden sind; und
dass der Elektromotor (110) ferner ein Elektromotorgehäuse (113) umfasst und das Elektromotorgehäuse (113) mit dem Montagegestell (130) verbunden ist.

2. Nebenabtriebs-Übertragungsvorrichtung (100) nach Anspruch 1, wobei das Montagegestell (130) mit mehreren Senklöchern (1303) entlang einer Umfangsrichtung des Montageanschlags (1301) versehen ist, durch die jeweils Befestigungselemente hindurchgeführt werden, um das Montagegestell (130) mit dem Elektromotorgehäuse (113) zu verbinden.

3. Nebenabtriebs-Übertragungsvorrichtung (100) nach Anspruch 1, wobei die Hydraulikpumpe (120) ferner ein Pumpengehäuse (123) umfasst und das Pumpengehäuse (123) mit dem Montagegestell (130) verbunden ist.

4. Nebenabtriebs-Übertragungsvorrichtung (100) nach Anspruch 3, wobei das Montagegestell (130) mit mehreren Verbindungsöffnungen (1305) entlang einer Umfangsrichtung des Montageanschlags (1301) versehen ist, durch die jeweils Befestigungselemente hindurchgeführt werden, um das Montagegestell (130) mit dem Pumpengehäuse (123) zu verbinden.

5. Nebenabtriebs-Übertragungsvorrichtung (100) nach einem der Ansprüche 1 bis 4, wobei die Elektromotorausgangswelle (111) und die Pumpeneingangswelle (121) in einer konkaven und konvexen Weise eingefügt und angepasst sind.

6. Nebenabtriebs-Übertragungsvorrichtung (100) nach Anspruch 5, wobei die Elektromotorausgangswelle (111) eine Keilwellenhülse ist, die Pumpeneingangswelle (121) eine Keilwelle ist und die Keilwellenhülse außen auf die Keilwelle aufgesteckt ist.

7. Nebenabtriebs-Übertragungsvorrichtung (100) nach einem der Ansprüche 1 bis 4, weiter umfassend:
ein Zusatzgestell (140), das an einem Gehäuse eines Eingangsendes des Elektromotors (110) angebracht ist.

8. Kran, **dadurch gekennzeichnet, dass** er umfasst:
einen Maschinenrahmen;
die Nebenabtriebs-Übertragungsvorrichtung (100) nach einem der Ansprüche 1 bis 7, wobei die Nebenabtriebs-Übertragungsvorrichtung (100) am Maschinenrahmen angeordnet ist.

9. Kran nach Anspruch 8, ferner umfassend:
eine Stützplatte (200), die fest mit dem Maschinenrahmen verbunden ist;
wobei das Montagegestell (130) der Nebenabtriebs-Übertragungsvorrichtung (100) eine Montageplatte (131) und eine Bodenplatte (133) umfasst, wobei die Montageplatte (131) mit dem Montageanschlag (1301) versehen ist, wobei die Montageplatte (131) mit der Bodenplatte (133) verbunden ist und die Bodenplatte (133) lösbar mit der Stützplatte (200) verbunden ist.

## Revendications

1. Dispositif de transmission de prise de force (100), comprenant :
un moteur électrique (110) comprenant un arbre de sortie de moteur électrique (111) ;
une pompe hydraulique (120) comprenant un arbre d'entrée de pompe (121) ; **caractérisé en ce que** le dispositif de transmission de prise de force comprend en outre
un support de montage (130) pourvu d'une butée de montage (1301) pénétrant le support de montage (130) dans une direction axiale (X), et la butée de montage est configurée pour former une limite radiale pour l'arbre de sortie de moteur électrique et/ou l'arbre d'entrée de pompe ;
que l'arbre de sortie de moteur électrique (111) et l'arbre d'entrée de pompe (121) sont reliés l'un à l'autre par l'intermédiaire de la butée de montage (1301) ; et
que le moteur électrique (110) comprend en outre un boîtier de moteur électrique (113), et que le boîtier de moteur électrique (113) est relié au support de montage (130).

2. Dispositif de transmission de prise de force (100) selon la revendication 1, dans lequel le support de montage (130) est pourvu d'une pluralité de trous alésés (1303) selon une direction circonférentielle de la butée de montage (1301) pour laisser passer respectivement des éléments de serrage afin de relier le support de montage (130) et le boîtier de moteur électrique (113).

3. Dispositif de transmission de prise de force (100) selon la revendication 1, dans lequel la pompe hydraulique (120) comprend en outre un boîtier de pompe (123), et le boîtier de pompe (123) est relié au support de montage (130).

4. Dispositif de transmission de prise de force (100) selon la revendication 3, dans lequel le support de montage (130) est pourvu d'une pluralité de trous de liaison (1305) selon une direction circonférentielle de la butée de montage (1301) pour laisser passer respectivement des éléments de serrage afin de relier le support de montage (130) et le boîtier de pompe (123).

5. Dispositif de transmission de prise de force (100) selon l'une quelconque des revendications 1 à 4, dans lequel l'arbre de sortie de moteur électrique (111) et l'arbre d'entrée de pompe (121) sont insérés et correspondent l'un à l'autre de manière convexe-concave.

6. Dispositif de transmission de prise de force (100) selon la revendication 5, dans lequel l'arbre de sortie de moteur électrique (111) est un manchon cannelé, l'arbre d'entrée de pompe (121) est un arbre cannelé, et le manchon cannelé est manchonné sur un extérieur de l'arbre cannelé.

7. Dispositif de transmission de prise de force (100) selon l'une quelconque des revendications 1 à 4, comprenant en outre :
un support auxiliaire (140) disposé sur un boîtier d'une extrémité d'entrée du moteur électrique (110).

8. Grue, **caractérisée par** comprenant :
un châssis de machine ;
le dispositif de transmission de prise de force (100) selon l'une quelconque des revendications 1 à 7, dans lequel le dispositif de transmission de prise de force (100) est prévu sur le châssis de machine.

9. Grue selon la revendication 8, comprenant en outre :
une plaque de support (200) reliée de manière fixe au châssis de machine ;
dans lequel le support de montage (130) du dispositif de transmission de prise de force (100) comprend une plaque de montage (131) et une plaque inférieure (133), la plaque de montage (131) est pourvue de la butée de montage (1301), la plaque de montage (131) est reliée à la plaque inférieure (133), et la plaque inférieure (133) est reliée de manière amovible à la plaque de support (200).
